# EUROPEAN PATENT APPLICATION

(11) **EP 1 122 225 A1**
(43) Date of publication of application: **08.08.2001**
(21) Application number: 00915479.0
(22) Date of filing: 11.04.2000
(51) Int. Cl.: C04B 35/58

(54) **MATERIAL WITH HIGH-TEMPERATURE OXIDATION RESISTANCE CONSISTING MAINLY OF MoSi 2? WITH EXCELLENT BRITTLE RESISTANCE AND HEATING MATERIAL**

(30) Priority: 10.05.1999 JP 12801399
(71) Applicant: JAPAN ENERGY CORPORATION, Tokyo 105-0001 (JP)
(72) Inventor: Takagake, Daisuke Isohara Factory of Nikko Mat. Co, Kitaibaraki-shi Ibaraki-Ken 319-1535 (JP); Takamura, Hiroshi Isohara Factory of Nikko Mat. Co, Kitaibaraki-shi Ibaraki-Ken 319-1535 (JP)
(74) Representative: Meddle, Alan Leonard
(86) International application number: JP0002344
(87) International publication number: WO0068166

(57) **Abstract**

The present invention relates to MoSi₂-based high-temperature oxidation-resistant and heating materials having excellent anti-brittleness, containing an MoSi₂ base material, or a base material containing 70% by weight or more MoSi₂ as the main component, in which the diffraction strength at the principal peak of Si (2θ = 28.440°, by JCPDS) by the X-ray diffraction (Cu Kα) of the base material is at largest 1/100 of the diffraction strength at the principal peak of MoSi₂ (2θ = 44.684°) ; and the diffraction strength at the principal peak of Mo₅Si₃ (2θ = 38.405°, by JCPDS) is 1/300 or more and 1/100 or less of the diffraction strength at the principal peak of MoSi₂ (2θ = 44.684°).

## Description

### Technical Field

The present invention relates to high-temperature oxidation-resistant and heating materials that consist of an MoSi₂ base material or a base material containing 70% by weight or more MoSi₂ as the main component thereof.

### Background Art

Molybdenum disilicide (MoSi₂) is a compound that has the Mo:Si mole ratio of 1:2, which is manufactured mainly by powder metallurgy.

Since such an MoSi₂ base material or a base material containing MoSi₂ as the main component thereof forms a surface protective film consisting mainly of SiO₂ on the surface in an oxidizing atmosphere at a high temperature, these materials have widely been studied as the next-generation high-temperature oxidation-resistant materials utilizing these characteristics. Such base materials are also widely used as heating materials.

In general, MoSi₂ is produced by mixing and sintering predetermined quantities of Mo powder and Si powder. MoSi₂ is a compound that has little composition latitude, and the formation of MoSi₂ that has a perfectly stoichiometric composition is very difficult.

Synthetic MoSi₂ base materials that are industrially manufactured and used normally contain trace quantities of free Si or Mo₅Si₃. Since Mo₅Si₃ and free Si overlap Mo and Si in MoSi₂ in chemical analysis, making identification and quantitative determination difficult, these materials have been marketed under the name of MoSi₂ simply as if they are pure MoSi₂ though these trace quantities of elements or compounds are mixed.

However, in the field of these materials such trace quantities of elements or compounds has attracted little interest. Therefore, it cannot be said that the controls of these trace quantities of elements or compounds for the purpose of optimization of anti-brittleness of high-temperature oxidation-resistant or heating materials, have not been especially considered or discussed, and there has been no reports or literatures that refer to the selection of starting materials, the analysis of initial state of practical use, or the relationship between use at high temperatures and brittleness, other than reports that simply suggest the possibility of inhibiting the growth of MoSi₂ grains by Mo₅Si₃ spontaneously formed during the oxidizing reaction at a high temperature.

Conventional oxidation-resistant or heating materials consisting of an MoSi₂ base material or MoSi₂-based material are manufactured from MoSi₂ powder in which a trace of Mo₅Si₃ or free Si is mixed. The inventors of the present invention found that a trace of Mo₅Si₃ or free Si in practically used sintered products was not controlled, resulting in poor anti-brittleness in use at high temperatures.

### Disclosure of Invention

The object of the present invention is to prevent the above-described brittleness by controlling the content of Mo₅Si₃ and free Si, and to provide an oxidation-resistant and heating material consisting of an MoSi₂ base material or MoSi₂-based material that excels in anti-brittleness and durability.

To solve the above problems, the inventors of the present invention conducted exhaustive studies by repeated syntheses in various Mo:Si ratios, and blending these synthesized materials to produce various base materials having different free Si and Mo₅Si₃ contents, and obtained the following findings.

That is, one of major factors of brittleness of conventional oxidation-resistant and heating material consisting of an MoSi₂ base material or MoSi₂-based material is the presence of a trace of free Si that cannot be determined by ordinary chemical analyses.

The inventors found, as a result of studies, that it is effective and necessary to control the diffraction strength at the principal peak of Si (2θ = 28.440°, by JCPDS) by the X-ray diffraction (Cu Kα) of a sintered body to be 1/100 or less, preferably 1/10000 of the diffraction strength at the principal peak of MoSi₂, (2θ = 44.684°), more preferably to virtually 0 for preventing the brittleness when used at high temperatures; that the presence of Mo₅Si₃ in which the diffraction strength at the principal peak of Mo₅Si₃, (2θ = 38.405°, by JCPDS) is 1/300 or more and 1/10 or less of the diffraction strength at the principal peak of MoSi₂, (2θ = 44.684°) is effective for preventing the brittleness of the heating material; and that the presence of Mo₅Si₃ that exceeds the above limit is harmful because this causes the deterioration of oxidation resistance when used at high temperatures.

Based on these findings, the present invention provides, (1) an MoSi₂-based high-temperature oxidation-resistant and heating material having excellent anti-brittleness, containing an MoSi₂ base material, or a base material containing 70% by weight or more MoSi₂, as the main component, wherein the diffraction strength at the principal peak of Si (2θ = 28.440°, by JCPDS) by the X-ray diffraction of the base material (tube: Cu, characteristic line: Kα) is 1/100 or less of the diffraction strength at the principal peak of MoSi₂, (2θ = 44.684°) ; and the diffraction strength at the principal peak of Mo₅Si₃, (2θ = 38.405°, by JCPDS) is 1/300 or more and 1/10 or less of the diffraction strength at the principal peak of MoSi₂, (2θ = 44.684°) ; and

(2) the MoSi₂-based high-temperature oxidation-resistant and heating material that excels in anti-brittleness according to (1), characterized in that the diffraction strength at the principal peak of Si is 1/10000 or less of the diffraction strength at the principal peak of MoSi₂.

### Brief Description of the Drawings

Figure 1 is a graph showing relationship between retention temperature in the air and the transverse rupture strength [kg/mm²] of Example 1 and Comparative Example 1; and
Figure 2 is a graph showing relationship between retention time in the air at 1600°C and the transverse rupture strength [kg/mm²] of Example 2 and Comparative Example 2.

### Embodiments of the Invention

In the synthesis of MoSi₂ for a high-temperature oxidation-resistant and heating material that consists of an MoSi₂ base material or a base material that contains 70% by weight or more MoSi₂ as the main component, Mo and Si are combined intentionally in an Mo-rich ratio over the stoichiometric composition to form MoSi₂ that contains no free Si but a trace of Mo₅Si₃ at the same time.

Using the MoSi₂ that contains a trace of Mo₅Si₃ obtained by this synthesis, the MoSi₂ base material or the MoSi₂-based base material that satisfies the above-described Si and Mo₅Si₃ conditions was formed.

As a result, the anti-brittleness property significantly superior to that of base materials that contain free Si beyond the above-described range was obtained.

Judging from the diffraction strength ratio of respective principal peaks of MoSi₂, Si, and Mo₅Si₃, the base material that contains no Si but only Mo₅Si₃ in the above-described range had better anti-brittleness property than the base material that contains substantially no free Si and Mo₅Si₃ (diffraction strength ratio of 1/10000 or less) .

However, it was known that if the content of Mo₅Si₃ exceeds the above range, oxidation resistance is rather degraded, and such a base material is not suitable as a high-temperature oxidation-resistant material or a heating material.

In general, an MoSi₂-based high-temperature oxidation-resistant and heating material must contain 70% by weight or more MoSi₂, and in the present invention, the effect as a high-temperature oxidation-resistant material or a heating material is exerted by MoSi₂ in this component range.

In an MoSi₂-based multi-component system, if respective principal peaks of MoSi₂, Si, and Mo₅Si₃ are difficult to be identified from peaks of other components in X-ray diffraction, the peak is compared with the peak other than the peak specified above (in claims) based on the relative strength listed in the JCPDS card, and the content of Si and MO₅Si₃ are examined.

In the case of Si for example, if the diffraction strength of 2θ = 28.440° (relative strength in the JCPDS card is 100) overlaps with the peaks of other components and cannot be identified, the diffraction strength of 2θ = 47.302° (relative strength in the JCPDS card is 55) is compared with 2θ = 44.684° of MoSi₂, and the ratio is made to be a value of 1/100 multiplied by 55/100 or less.

### Examples

Next, the present invention will be described referring to examples. These examples are only illustrate, and can be modified in various ways. Therefore, the present invention is not limited to the examples described below, and includes modifications and changes in constitutions other than the examples without deviation from the technical concept of the present invention.

MoSi₂-5wt% SiO₂ sintered bodies of a diameter of 9 mm that contain MoSi₂ of different diffraction strength ratio of respective principal peaks of MoSi₂, Si, and Mo₅Si₃ (XA, XB, and XC, respectively) in X-ray diffraction, here, different XB/XA and XC/XA values, were prepared. These sintered bodies were fabricated under the same conditions other than Mo:Si ratios. Sintering was performed in an argon atmosphere at 1500°C.

The quantities of Si and Mo₅Si₃ that are contained in these sintered bodies are shown in Table 1 as the parameters of the above-described XB/XA and XC/XA.

**[Table 1]**

| | XB/XA value (Si content) | XC/XA value (MO₅Si₃ content) |
|---|---|---|
| Example 1 | < 0.01% | 0.80% |
| Example 2 | < 0.01% | 1.7% |
| Comparative Example 1 | 1.2% | 0.92% |
| Comparative Example 2 | < 0.01% | < 0.01% |
| Comparative Example 3 | < 0.01% | 18.2% |

### (Example 1 and Comparative Example 1)

Sintered bodies of Example 1 and Comparative Example 1 shown in Table 1 were heated in the air to 1300, 1400, 1500, 1600, 1650, and 1700°C, and the temperatures were maintained for 2 minutes. The sintered bodies were then cooled to room temperature, and subjected to three-point bending transverse rupture tests in accordance with JIS to compare the effect of free Si on the brittleness of the materials.

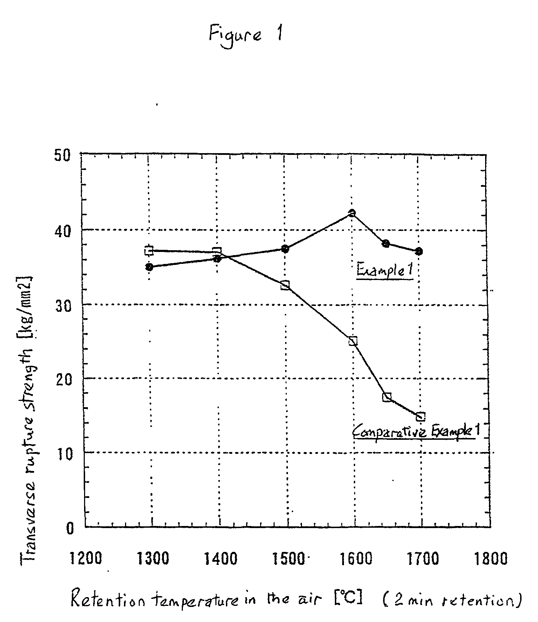

Ten transverse rupture tests were carried out for each heat treatment temperature, and the mean values of eight measurements excluding the maximum and the minimum were plotted. The results are shown in Figure 1.

As Figure 1 shows, the transverse rupture strength of Comparative Example 1, which contained a trace of free Si more than 1%, that is, the principal peak diffraction strength of Si more than 1/100 of the principal peak diffraction strength of MoSi₂, was significantly lowered by maintaining at 1500°C or above, which is higher than the melting point of Si. However, the material of Example 1, which contained substantially no free Si, that is, the principal peak diffraction strength of Si was 1/100 of the principal peak diffraction strength of MoSi₂ or less, maintained a high strength in the transverse rupture test even after heating to a high temperature.

As described above, even a trace of free Si affects the performance of the base material significantly.

Therefore, when the material is used in the place where heat cycles between room temperature and high temperature are repeated, the product of the present invention, which exhibits little lowering of strength after such heat cycles, is obviously excellent.

### (Example 2 and Comparative Example 2)

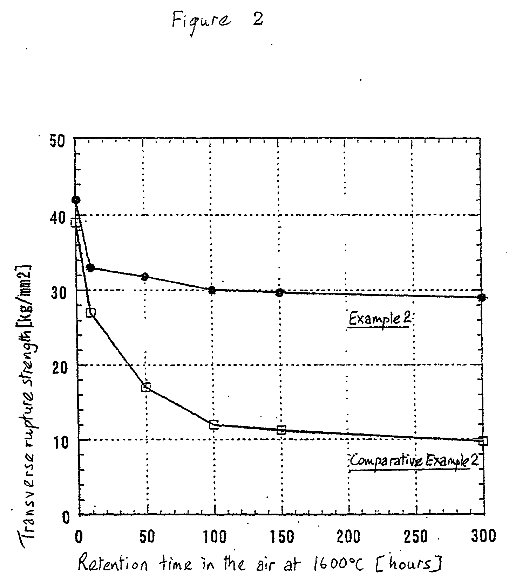

Next, Example 2 and Comparative Example 2 shown in Table 1 were subjected to durability tests. In these tests, after sintered bodies having the compositions shown in Table 1 were densified by retaining in the air at 1700°C for 2 minutes, they were retained in the air at 1600°C for 10 to 300 hours, and then cooled to room temperature. Then, they were subjected to transverse rupture tests in accordance with JIS to check transverse rupture strength against retention time at 1600°C. The results are shown in Figure 2.

The strength of Comparative Example 2, that contained no Mo₅Si₃, was steeply lowered in less than 100 hours, and significantly embrittled from the initial strength, while the lowering of strength of Example 2, which contained an adequate quantity of Mo₅Si₃ ceased in a short period of time, and thereafter, the high strength was maintained.

These results show that the quality of the product of the present invention, which contains a trace of Mo₅Si₃, as a high-temperature oxidation-resistant and heating material, is little changed by aging, and excels in durability.

It was confirmed that the presence of this trace of Mo₅Si₃ was effective when the principal peak diffraction strength of Mo₅Si₃ was 1/300 or more or about 0.3% or more of the principal peak diffraction strength of MoSi₂ or more.

### (Example 3 and Comparative Example 3)

Next, after the sintered bodies of Example 2 and Comparative Example 3 shown in Table 1 were retained in the air at 1720°C for 1 hour, they were cooled to room temperature, and the surfaces were observed. The surface of the base material of Example 2 was completely coated with SiO₂-based surface protective film, and smooth surface state was maintained, while the surface protective film of the base material of Comparative Example 3, which contained excessive Mo₅Si₃, was partly broken, and smooth surface state was not maintained.

Also the trace of blowout of gaseous MoO₃ was found on the surface of Comparative Example 3, which revealed that an excessive Mo₅Si₃ content degraded oxidation resistance,

In a series of experiments, it was confirmed that the upper limit not causing the degradation of oxidation resistance due to the Mo₅Si₃ content was 10%, that is, the presence of a trace of Mo₅Si₃ should be such that the principal peak diffraction strength of Mo₅Si₃ was 1/10 or less of the principal peak diffraction strength of MoSi₂.

### Industrial Applicability

In a material consisting of an MoSi₂ base material, or a base material containing 70% by weight or more MoSi₂, as the main component, if MoSi₂ is contained of in a quantity such that the diffraction strength at the principal peak of Si (2θ = 28.440°, by JCPDS) by the X-ray diffraction (Cu Kα) of the base material is at largest 1/100 of the diffraction strength at the principal peak of MoSi₂, (2θ = 44.684°) ; and the diffraction strength at the principal peak of Mo₅Si₃, (2θ = 38.405°, by JCPDS) is 1/300 or more and 1/10 or less of the diffraction strength at the principal peak of MoSi₂, (2θ = 44.684°), the anti-brittleness at high temperatures is significantly improved compared with conventional high-temperature oxidation-resistant and heating materials that contain free Si having the diffraction strength ratio more than 1/100. This is particularly useful for structural materials that are subjected to repeated room temperature-high temperature heat cycles.

Also, when Mo₅Si₃ is contained in the above-described range, higher anti-brittleness is obtained than the materials that contain no Mo5Si₃ (1/10000 or less) . The contained Mo₅Si₃ has a higher melting point than MoSi₂, is located in the grain boundary to inhibit grain growth, and has the effect of enhancing durability at high temperature.

As described above, the material of the present invention excels in anti-brittleness properties as a high-temperature oxidation-resistant material and a heating material, and is very useful as a heat-generating body or a material subjected to the effect of high temperature in an oxidizing atmosphere.

## Claims

1. An MoSi₂-based high-temperature oxidation-resistant and heating material having excellent anti-brittleness, containing an MoSi₂ base material, or a base material containing 70% by weight or more MoSi₂, as the main component, wherein the diffraction strength at the principal peak of Si (2θ = 28.440°, by JCPDS) by the X-ray diffraction (Cu Kα) of the base material is 1/100 or less of the diffraction strength at the principal peak of MoSi₂, (2θ = 44.684°) ; and the diffraction strength at the principal peak of Mo₅Si₃, (2θ = 38.405°, by JCPDS) is 1/300 or more and 1/10 or less of the diffraction strength at the principal peak of MoSi₂, (2θ = 44.684°).

2. The MoSi₂-based high-temperature oxidation-resistant and heating material that excels in anti-brittleness according to Claim 1, characterized in that the diffraction strength at the principal peak of Si is 1/10000 or less of the diffraction strength at the principal peak of MoSi₂.
